# EUROPÄISCHE PATENTSCHRIFT

(11) **EP 2 533 913 B1**
(45) Veröffentlichungstag und Bekanntmachung des Hinweises auf die Patenterteilung: **23.01.2019**
(21) Anmeldenummer: 11703863.8
(22) Anmeldetag: 09.02.2011
(51) Int. Cl.: B09B 3/00, C04B 35/52, C04B 35/622, C04B 35/626, C04B 35/83, H05B 7/085

(54) **VERFAHREN ZUR HERSTELLUNG EINES FORMTEILS AUS EINEM KOHLENSTOFFWERKSTOFF UNTER VERWENDUNG VON WIEDERVERWERTETEN CARBONFASERN**
METHOD OF PRODUCING MOLDED PARTS OF CARBON MATERIAL USING RECYCLED CARBON FIBERS
PROCÉDÉ DE FABRICATION DE PIÈCES MOULÉES EN UN MATÉRIAU EN CARBONE À L'AIDE DE FIBRES DE CARBONE RECYCLEES

(30) Priorität: 10.02.2010 DE 102010001787
(43) Veröffentlichungstag der Anmeldung: 19.12.2012
(73) Patentinhaber: SHOWA DENKO CARBON Germany GmbH, 86405 Meitingen (DE)
(72) Erfinder: CHRIST, Martin, 86159 Augsburg (DE); ÖTTINGER, Oswin, 86405 Meitingen (DE); BODE, Reiner, 86447 Aindling (DE); PRÉFONTAINE, Alain, 65203 Wiesbaden (DE); SCHWAIGER, Georg, 85405 Nandlstadt (DE)
(86) Internationale Anmeldenummer: PCT/EP2011/051893
(87) Internationale Veröffentlichungsnummer: WO 2011/098486

(56) Entgegenhaltungen:
- EP-A1- 0 636 428
- EP-A1- 1 950 253
- EP-A2- 0 720 973
- WO-A2-2011/007184
- DE-A1- 3 802 670

## Beschreibung

Die vorliegende Erfindung betrifft ein Verfahren zur Herstellung eines Formteils aus Carbonfasern in einer Menge von weniger als 20 Gew.-% enthaltendem Kohlenstoff, insbesondere Graphit, unter Verwendung von wiederverwerteten Carbonfasern.

Formteile aus Werkstoffen auf Basis von Kohlenstoff und insbesondere auf Basis von Graphit werden auf einer Vielzahl von technischen Gebieten eingesetzt. Ein Beispiel für solche Formteile sind Graphitelektroden, welche aufgrund der guten Wärmeleitfähigkeit, des geringen elektrischen Widerstandes und der chemischen Beständigkeit von Graphit unter anderem in elektrothermischen Verfahren und insbesondere bei der Stahlherstellung in elektrischen Lichtbogenöfen zum Schmelzen von Schmelzgut eingesetzt werden. Ein weiteres Beispiel für solche Formteile sind Verbindungsstücke auf Basis von Graphit, welche auch als Graphitnippel bezeichnet werden und zum stirnseitigen Verbinden von Graphitelektroden unter Ausbildung von Elektrodensträngen eingesetzt werden. Diese Verbindungsstücke sind üblicherweise doppelkegelstumpfförmig bzw. in der Form eines Bikonus oder zylinderförmig ausgebildet und weisen ein Außengewinde auf, über welches diese in an den Stirnseiten der Graphitelektroden vorgesehene Gewindeschachteln mit dazu komplementären Innengewinde eingeschraubt werden, um jeweils zwei Elektroden über ihre Stirnseiten miteinander zu verbinden. Bei dem Betrieb eines Lichtbogenofens, bei dem an den Elektrodenstrang eine elektrische Spannung angelegt, infolge dessen ein von dem unteren Ende des Elektrodenstrangs zu dem Schmelzgut führender Lichtbogen erzeugt wird, welcher ausreichend hohe Temperaturen von beispielsweise 1.500°C erzeugt, um das Schmelzgut, beispielsweise Stahlschrott oder Eisenschwamm, zum Schmelzen zu bringen, wird der Elektrodenstrang mechanisch, thermisch und elektrisch stark beansprucht.

Um die Festigkeit und die Thermoschockbeständigkeit von Graphitelektroden und Graphitverbindungsstücken im besonderen und von Bauteilen aus Werkstoffen auf Basis von Kohlenstoff im allgemeinen zu erhöhen und den thermischen Ausdehnungskoeffizienten dieser zu verringern, ist es bereits vorgeschlagen worden, diesen Werkstoffen Carbonfasern zuzugeben. Solche Carbonfasern werden beispielsweise hergestellt, indem aus kohlenstoffhaltigen Ausgangsstoffen, beispielsweise aus Polyacrylnitril, zunächst Fasern gesponnen werden, welche nachfolgend unter Verstreckung carbonisiert und ggf. graphitiert werden, bevor die so hergestellten Fasern abschließend oberflächenbehandelt und ggf. mit Schlichte beschichtet werden. Dabei ist es jedoch bei einer Vielzahl von Bauteilen aus Werkstoffen auf Basis von Kohlenstoff im allgemeinen und Graphit im speziellen, wie insbesondere bei Graphitelektroden und Graphitverbindungsstücken, wesentlich, dass die Carbonfasern in dem Werkstoff in einer Menge von maximal 20 Gew.-% enthalten sind, damit die Eigenschaften des Endprodukts gewünschtermaßen vornehmlich durch die Eigenschaften der Kohlenstoff- bzw. Graphitmatrix bestimmt werden. Zudem ist es bei Graphitelektroden und Graphitverbindungsstücken zwingend erforderlich, dass die Fasern fest mit dem Matrixmaterial verbunden sind, weil ansonsten die anwendungstechnischen Eigenschaften der Graphitelektroden und Graphitverbindungsstücke beeinträchtigt werden.

Aus der EP 1 460 883 A2 beispielsweise sind Verbindungsstücke für Elektroden bekannt, welche aus 0,2 bis 10 Gew.-% Carbonfasern enthaltendem Graphit zusammengesetzt sind, wobei die Oberflächen der Carbonfasern oxidativ aktiviert sind und die Carbonfasern zudem eine carbonisierte Beschichtung aufweisen. Zur Herstellung dieser Verbindungsstücke werden Carbonfasern zunächst an ihrer Oberfläche durch Oxidation aktiviert und anschließend mit einem vorzugsweise aus Wachs, Pech, Naturharzen oder thermoplastischen oder duroplastischen Polymeren ausgewählten Beschichtungsmittel beschichtet, bevor die so erhaltenen Fasern mit Koks, Pech und ggf. Additiven vermischt werden und die so erhaltene Mischung zu einem Grünkörper geformt wird, welcher anschließend carbonisiert und schließlich graphitiert wird.

Allerdings ist die Herstellung von Carbonfasern sehr aufwendig und energieintensiv, weswegen die Materialkosten für die Carbonfasern deutlich über den Kosten der zur Herstellung der Kohlenstoffmatrix bzw. Graphitmatrix eingesetzten Rohstoffe liegen. Folglich wäre ein entsprechendes Herstellungsverfahren wünschenswert, welches einfach und kostengünstig durchzuführen ist.

Aufgabe der vorliegenden Erfindung ist es daher, ein Verfahren zur Herstellung eines Formteils aus weniger als 20 Gew.-% Carbonfasern enthaltendem Kohlenstoff, insbesondere Graphit, bereitzustellen, welches einfach und insbesondere kostengünstig durchzuführen ist und mit dem insbesondere Graphitelektroden und Graphitverbindungsstücke mit exzellenten Eigenschaften hergestellt werden können.

Erfindungsgemäß wird diese Aufgabe gelöst durch ein Verfahren zur Herstellung eines Formteils aus Carbonfasern in einer Menge von weniger als 20 Gew.-% enthaltendem Kohlenstoff, welches die nachfolgenden Schritte umfasst:
a) Zerkleinern von Abfallteilen oder Ausschussteilen aus einem carbonfaserverstärkten Verbundwerkstoff,
b) Herstellen einer Mischung aus dem in dem Schritt a) erhaltenen, zerkleinerten Produkt, einem Bindemittel, einem Kohlenstoffmaterial und ggf. einem oder mehreren Additiven, wobei die Mischung weniger als 20 Gew.-% Fasern enthält,
c) Formen der in dem Schritt b) erhaltenen Mischung zu einem Formteil und
d) Carbonisieren des in dem Schritt c) erhaltenen Formteils.

Diese Lösung basiert auf der überraschenden Erkenntnis, dass durch ein Verfahren, bei dem Abfallteile oder Ausschussteile aus einem carbonfaserverstärkten Verbundwerkstoff zerkleinert werden und das zerkleinerte Produkt als Faserausgangsmaterial mit den zur Ausbildung einer Matrix eines Kohlenstoff-Verbundwerkstoffes notwendigen Bestandteilen, nämlich Bindemittel, Kohlenstoffmaterial und ggf. einem oder mehreren Additiv(en), vermischt wird und diese Mischung zu einem Formteil geformt und anschließend carbonisiert und ggf. graphitiert wird, auf einfache Weise Formteile, beispielsweise Graphitelektroden und Graphitverbindungsstücke für Graphitelektroden, aus Carbonfasern in einer Menge von weniger als 20 Gew.-% enthaltendem Kohlenstoff mit ausgezeichneten Eigenschaften, insbesondere mit einer ausgezeichneten Festigkeit, einem niedrigen thermischen Ausdehnungskoeffizienten und einer exzellenten Temperaturschockbeständigkeit, hergestellt werden können. Dabei war es insbesondere überraschend, dass mit diesem Verfahren Formteile aus carbonfaserverstärktem Kohlenstoff bzw. Graphit erhalten werden, in dem die Carbonfasern sehr fest an das Kohlenstoffmatrixmaterial haften. Durch diese feste Haftung der Carbonfasern an das Kohlenstoffmatrixmaterial wird der thermische Ausdehnungskoeffizient der Formteile verringert und werden die Festigkeit und die Temperaturschockbeständigkeit der Formteile erhöht. Da bei diesem Verfahren auf den Einsatz von neu hergestellten Carbonfasern verzichtet wird, sondern anstelle dessen alte Carbonfasern aus zerkleinerten Abfallteilen oder Ausschussteilen aus einem carbonfaserverstärkten Verbundwerkstoff verwendet werden, ist dieses Verfahren auch sehr viel kostengünstiger als die aus dem Stand der Technik bekannten Verfahren zur Herstellung entsprechender Formteile. Bei dem erfindungsgemäßen Verfahren handelt es sich mithin nicht nur um ein Verfahren zur Herstellung eines Formteils aus Carbonfasern in einer Menge von weniger als 20 Gew.-% enthaltendem Kohlenstoff, sondern insbesondere auch um ein Verfahren zum Wiederverwerten bzw. Recyclen von Abfallteilen oder Ausschussteilen aus einem carbonfaserverstärkten Verbundwerkstoff.

Unter dem in dem Verfahrensschritt b) des erfindungsgemäßen Verfahrens eingesetzten Kohlenstoffmaterial wird im Sinne der vorliegenden Erfindung jedes hohe Mengen an Kohlenstoff enthaltende Material verstanden, insbesondere ein Material, welches zu wenigstens 70 Gew.-%, besonders bevorzugt zu wenigstens 80 Gew.-% und ganz besonders bevorzugt zu wenigstens 90 Gew.-% aus Kohlenstoff besteht. Ein bevorzugtes Beispiel für ein solches Kohlenstoffmaterial ist Koks.

Grundsätzlich können in dem Verfahrensschritt a) des erfindungsgemäßen Verfahrens Abfallteile oder Ausschussteile aus einem beliebigen carbonfaserverstärkten Verbundwerkstoff, also einem Werkstoff, bei dem Carbonfasern in einer Matrix eingebettet sind, eingesetzt werden. Gute Ergebnisse werden dabei insbesondere erhalten, wenn in dem Verfahrensschritt a) Abfallteile bzw. Ausschussteile eingesetzt werden, welche aus einem carbonfaserverstärkten Kunststoff (CFK), aus einem carbonfaserverstärkten Kohlenstoff (CFC), aus einem carbonfaserverstärkten Beton oder aus einer Mischung aus zwei oder mehr der vorgenannten Verbundwerkstoffe zusammengesetzt sind. Beispiele für geeignete Matrixmaterialien für den CFK sind alle Arten von thermoplastischen oder von duroplastischen Kunstharzen, wie beispielsweise Phenolharz oder Epoxidharz.

Vorzugsweise enthält der carbonfaserverstärkte Verbundwerkstoff, aus dem die in dem Verfahrensschritt a) eingesetzten Abfallteile bzw. Ausschussteile zusammengesetzt sind, wenigstens 20 Vol.-% Carbonfasern, besonders bevorzugt 30 bis 70 Vol.-% Carbonfasern und ganz besonders bevorzugt 40 bis 60 Vol.-% Carbonfasern. Diese Ausführungsform ist insbesondere dann bevorzugt, wenn die eingesetzten Abfallteile bzw. Ausschussteile aus CFK oder CFC zusammengesetzt sind. Je mehr Carbonfasern in den Verbundwerkstoffen der eingesetzten Abfallteile bzw. Ausschussteile enthalten sind, umso weniger Matrixmaterial aus dem zerkleinerten Produkt wird in den Verfahrensschritt b) eingetragen bzw. kann auf eine Abtrennung des Matrixmaterials aus dem zerkleinerten Produkt vor der Durchführung des Verfahrensschritts b) verzichtet werden.

Sofern die Abfallteile bzw. Ausschussteile aus carbonfaserverstärktem Beton zusammengesetzt sind, beträgt der Gehalt an Carbonfasern typischerweise weniger als 10 Vol.-%.

In dem Verfahrensschritt a) können insbesondere Abfallteile oder Ausschussteile aus einem carbonfaserverstärkten Verbundwerkstoff eingesetzt werden, der als Carbonfasern Kurzfasern und/oder Langfasern enthält.

Zum Zerkleinern der Abfallteile oder Ausschussteile in dem Verfahrensschritt a) können alle dem Fachmann bekannten Vorrichtungen eingesetzt werden, welche carbonfaserverstärkten Verbundwerkstoff zerkleinern können. Nicht beschränkende Beispiele hierfür sind Shredder, Schneidmühlen, Prallmühlen und Hammermühlen.

Nach dem Zerkleinern wird auf das zerkleinerte Gut bzw. die recycelten Fasern vorzugsweise Schlichte aufgetragen, wobei hierfür alle dem Fachmann bekannten Materialien eingesetzt werden können.

Um in dem Verfahrensschritt b) eine gute Vermischung mit dem Bindemittel, dem Kohlenstoffmaterial und ggf. Additiven zu erreichen, werden die Abfallteile oder Ausschussteile aus dem carbonfaserverstärkten Verbundwerkstoff in dem Verfahrensschritt a) bevorzugt vornehmlich zu Partikeln mit einer Länge zwischen 1 und 100 mm zerkleinert. Unter vornehmlich wird in diesem Zusammenhang verstanden, dass mehr als 50 Gew.-%, bevorzugt wenigstens 75 Gew.-%, besonders bevorzugt wenigstens 90 Gew.-% und ganz besonders bevorzugt wenigstens 95 Gew.-% der nach dem Zerkleinern vorliegenden Partikel eine Länge zwischen 1 und 100 mm aufweisen. Dabei können die einzelnen Partikel jede beliebige Geometrie aufweisen. Beispielsweise können diese in der Form von Blättchen mit beispielsweise rechteckigem Querschnitt vorliegen oder zylinderförmig oder faserförmig ausgestaltet sein.

Zudem wird es in Weiterbildung des Erfindungsgedankens vorgeschlagen, den Verfahrensschritt a) so durchzuführen, dass das zerkleinerte Produkt neben den zerkleinerten Partikeln nur vergleichsweise geringe Mengen Staub enthält. Zu diesem Zweck kann Staub während oder nach dem Zerkleinern aus dem Produkt ausgesiebt werden. Unter Staub werden in diesem Zusammenhang Teilchen bzw. Partikel mit einer mittleren Teilchen- bzw. Partikelgröße von weniger als 100 µm verstanden. Vorzugsweise wird das Zerkleinern in dem Verfahrensschritt a) so durchgeführt, dass das Produkt nach dem Zerkleinern weniger als 5 Gew.-% Staubpartikel mit einer mittleren Partikelgröße von weniger als 100 µm enthält, was regelmäßig nur durch Sieben erreicht werden kann.

Gemäß einer weiteren bevorzugten Ausführungsform der vorliegenden Erfindung werden in dem Verfahrensschritt a) die beiden Komponenten des Verbundwerkstoffes, aus dem die Abfallteile bzw. Ausschussteile zusammengesetzt sind, also die Matrix und die Carbonfasern, voneinander gelöst, und zwar während oder nach dem Zerkleinern. Unter Lösen wird dabei eine Faser-Matrix-Enthaftung verstanden.

Bei dieser Ausführungsform kann das Lösen der Matrix von den Carbonfasern durch Kontaktieren der Abfallteile oder Ausschussteile mit einer Säure, beispielsweise mit einer Mineralsäure, wie Schwefelsäure oder Salpetersäure, mit einer Lauge, beispielsweise Natronlauge, oder mit einem Lösungsmittel bewirkt werden. Alternativ dazu kann das Lösen der Matrix von den Carbonfasern zwangsläufig beim Zerkleinern auftreten. Die beiden Komponenten (Carbonfasern und Matrixmaterial) können dann zusammen dem Verfahrensschritt b) zugeführt werden.

Alternativ dazu kann in dem Verfahrensschritt a) während oder bevorzugt nach dem Zerkleinern der Abfallteile oder Ausschussteile das Matrixmaterial von den Carbonfasern des Verbundwerkstoffes abgetrennt werden, also das Matrixmaterial von den Carbonfasern entfernt werden, so dass dem Verfahrensschritt b) als Produkt des Verfahrensschritts a) nur die Carbonfasern zugeführt werden. Dies setzt naturgemäß eine vorherige oder gleichzeitige Faser-Matrix-Enthaftung voraus. Das Abtrennen der Matrix von den Carbonfasern kann beispielsweise durch Sieben oder Sichten erfolgen, wobei das Sichten vorzugsweise in einem Rotationssichter, Windsichter oder Zickzacksichter durchgeführt wird.

Grundsätzlich können in dem Verfahrensschritt b) als Bindemittel alle dem Fachmann zu diesem Zweck bekannten Verbindungen eingesetzt werden. Gute Ergebnisse werden insbesondere erhalten, wenn das Bindemittel aus der Gruppe ausgewählt wird, welche aus Phenolharzen, Pechen, Furanharzen, Phenylestern und beliebigen Mischungen von zwei oder mehr der vorgenannten Verbindungen besteht, wobei als Bindemittel besonders bevorzugt Pech eingesetzt wird.

In Weiterbildung des Erfindungsgedankens wird es vorgeschlagen, in dem Verfahrensschritt b) als Kohlenstoffmaterial Koks einzusetzen, wobei Pechkoks, metallurgischer Koks oder Petroleumkoks, insbesondere Nadelkoks, besonders bevorzugt sind. Vorzugsweise weist der eingesetzte Koks eine Partikelgröße von weniger als 30 mm, besonders bevorzugt von weniger als 15 mm und ganz besonders bevorzugt von 0,01 bis 3 mm auf.

Gemäß einer besonders bevorzugten Ausführungsform der vorliegenden Erfindung wird in dem Verfahrensschritt b) als Bindemittel Pech und als Kohlenstoffmaterial Koks eingesetzt.

Das Mischungsverhältnis zwischen Koks und Bindemittel wird vorzugsweise auf einen Wert zwischen 5:1 bis 2:1, beispielsweise auf etwa 4:1, eingestellt.

Zu dieser Mischung können optional alle dem Fachmann für diesen Zweck bekannte Additive zugegeben werden, wie beispielsweise 0,1 bis 0,5 Gew.-% Eisenoxid.

Erfindungsgemäß wird der (Carbon)fasergehalt der Mischung in dem Verfahrensschritt b) auf weniger als 20 Gew.-% eingestellt, wobei der (Carbon)fasergehalt der Mischung bevorzugt auf weniger als 15 Gew.-%, besonders bevorzugt auf weniger als 10 Gew.-%, ganz besonders bevorzugt auf weniger als 5 Gew.-% und höchst bevorzugt auf weniger als 3 Gew.-% eingestellt wird. Der in dem Verfahrensschritt b) eingestellte Fasergehalt ist kleiner als der oder gleich dem Fasergehalt des Endprodukts, da nach dem Verfahrensschritt b) der Mischung keine (Carbon)fasern mehr zugegeben werden, aber die Matrixkomponenten bei den nachfolgenden Temperaturbehandlungen, wie Carbonisierung und/oder Graphitierung, an Masse verlieren können.

In dem Verfahrensschritt c) wird die in dem Verfahrensschritt b) hergestellte Mischung durch ein beliebiges dem Fachmann zu diesem Zweck bekanntes Verfahren, beispielsweise durch Extrusion, zu einem Formkörper mit gewünschter Geometrie und gewünschten Maßen geformt.

Vorzugsweise wird das Carbonisieren in dem Verfahrensschritt d) bei einer Temperatur zwischen 600 und 1.200°C durchgeführt.

Nach dem Carbonisieren kann das carbonisierte Formteil optional graphitiert werden, was bevorzugt ist. Wenn eine solche Graphitierung durchgeführt wird, wird der Formkörper zwischen dem Verfahrensschritt d) und der Graphitierung vorzugsweise mit einem Imprägniermittel, welches vorzugsweise Imprägnierpech ist, imprägniert. Dabei können mehrere Imprägnierschritte durchgeführt werden, wobei zwischen jeweils zwei Imprägnierschritten bevorzugt jeweils eine Carbonisierung durchgeführt wird.

In Weiterbildung des Erfindungsgedankens wird es vorgeschlagen, die optionale Graphitierung bei einer Temperatur zwischen 1.800 und 3.000°C und besonders bevorzugt zwischen 2.300 und 2.700°C durchzuführen.

Gemäß einer weiteren bevorzugten Ausführungsform werden die in dem Verfahrensschritt a) zerkleinerten Abfallteile oder Ausschussteile, in denen wie zuvor beschrieben optional die Carbonfasern von dem Matrixmaterial gelöst worden sind oder das Matrixmaterial von den Carbonfasern abgetrennt worden ist, vor der Zuführung in den Verfahrensschritt b) einer oxidativen Behandlung unterzogen, um die Faseroberfläche bzw. Faserbündeloberfläche zu oxidieren. Dadurch entstehen auf der Faseroberfläche funktionelle sauerstoffhaltige Gruppen, wie Carboxylgruppen und/oder Hydroxylgruppen, oder andere aktivierte Gruppen, wie durch Carbonylgruppen aktivierte C-H-acide Gruppen, basische, pyronartige Oberflächengruppen oder dergleichen, wodurch die Faser-Matrix-Haftung erhöht wird und somit die Festigkeit des Formkörpers verbessert wird.

Dabei kann die oxidative Behandlung beispielsweise die Oxidation in einem ein Oxidationsmittel enthaltenden wässrigen Bad, die anodische Oxidation in einem Elektrolyt enthaltenden wässrigen Bad und/oder die Oxidation in einem ein Oxidationsmittel enthaltenden Gasstrom, beispielsweise bei 400 bis 600°C, umfassen. Als Oxidationsmittel können dabei alle gängigen Oxidationsmittel eingesetzt werden, wie beispielsweise (Erd)alkalimetallsalze, wie (Erd)alkalimetallnitrate, -sulfate, -chlorate, -bromate und -iodate, oder oxidierende Säuren, wie Salpetersäure, Schwefelsäure, Chlorsäure, Bromsäure oder Iodsäure. Zur Entfernung des Oxidationsmittels kann das oxidativ behandelte Produkt vor der Zuführung in den Verfahrensschritt b) beispielsweise mit entionisiertem Wasser gewaschen werden.

In Abhängigkeit von der Zusammensetzung des carbonfaserverstärkten Verbundwerkstoffes, aus dem die in dem Verfahrensschritt a) eingesetzten Abfallteile bzw. Ausschussteile zusammengesetzt sind, kann es bevorzugt sein, die Abfallteile oder Ausschussteile vor der Durchführung des Verfahrensschritts a) oder nach dem Zerkleinern in dem Verfahrensschritt a), aber vor dem Verfahrensschritt b) zu carbonisieren. Diese Ausführungsform ist insbesondere bevorzugt, wenn die eingesetzten Abfallteile oder Ausschussteile aus CFK bestehen, um das Matrixmaterial des Verbundwerkstoffes in Kohlenstoff zu überführen.

Nach dem Zerkleinern wird auf das zerkleinerte, carbonisierte Gut bzw. die recycelten Fasern vorzugsweise Schlichte aufgetragen.

Gemäß einer ersten ganz besonders bevorzugten Ausführungsform der vorliegenden Erfindung umfasst das erfindungsgemäße Verfahren die nachfolgenden Schritte:
a) Zerkleinern von Abfallteilen oder Ausschussteilen aus einem carbonfaserverstärkten Kohlenstoff (CFC) und optional Oxidation des zerkleinerten Produkts,
b) Herstellen einer Mischung aus dem in dem Schritt a) erhaltenen, zerkleinerten Produkt, Pech, Koks und ggf. einem oder mehreren Additiven, wobei die Mischung weniger als 20 Gew.-% Fasern enthält,
c) Formen der in dem Schritt b) erhaltenen Mischung zu einem Formteil,
d) Carbonisieren des in dem Schritt c) erhaltenen Formteils,
e) optional Imprägnieren des in dem Schritt d) carbonisierten Formteils mit einem Imprägniermittel und
f) optional Graphitieren des in dem Schritt d) carbonisierten Formteils oder des in dem Schritt e) imprägnierten Formteils.

Vorzugsweise sind die in dem Verfahrensschritt a) eingesetzten Abfallteile bzw. Ausschussteile aus carbonfaserverstärktem Verbundwerkstoff zusammengesetzt, welcher wenigstens 20 Vol.-% Carbonfasern, besonders bevorzugt 30 bis 70 Vol.-% Carbonfasern und ganz besonders bevorzugt 40 bis 60 Vol.-% Carbonfasern enthält.

Nach der Zerkleinerung und vor der Zuführung des zerkleinerten Produkts in den Verfahrensschritt b) kann eine Faser-Matrix-Enthaftung durchgeführt werden und das Matrixmaterial von den Carbonfasern abgetrennt werden, so dass dem Verfahrensschritt b) als Produkt des Verfahrensschritts a) nur die Carbonfasern zugeführt werden. Sofern eine oxidative Behandlung des Produkts erfolgt, wird die optionale Abtrennung vorzugsweise vor der oxidativen Behandlung durchgeführt.

Zudem ist es bei dieser Ausführungsform bevorzugt, nach dem Verfahrensschritt d) eine Imprägnierung und Graphitierung gemäß den Verfahrensschritten e) und f) durchzuführen. Dabei können die Verfahrensschritte d) und e) abwechselnd mehrmals nacheinander durchgeführt werden, bevor die Graphitierung durchgeführt wird.

Gemäß einer zweiten ganz besonders bevorzugten Ausführungsform der vorliegenden Erfindung umfasst das erfindungsgemäße Verfahren die nachfolgenden Schritte:
a) Zerkleinern von Abfallteilen oder Ausschussteilen aus einem carbonfaserverstärktem Kunststoff (CFK) und optional Oxidation des zerkleinerten Produkts,
b) Herstellen einer Mischung aus dem in dem Schritt a) erhaltenen, zerkleinerten Produkt, Pech, Koks und ggf. einem oder mehreren Additiven, wobei die Mischung weniger als 20 Gew.-% Fasern enthält,
c) Formen der in dem Schritt b) erhaltenen Mischung zu einem Formteil,
d) Carbonisieren des in dem Schritt c) erhaltenen Formteils,
e) optional Imprägnieren des in dem Schritt d) carbonisierten Formteils mit einem Imprägniermittel und
f) optional Graphitieren des in dem Schritt d) carbonisierten Formteils oder des in dem Schritt e) imprägnierten Formteils.

Bei dieser Ausführungsform ist es bevorzugt, dass die Abfallteile bzw. Ausschussteile aus CFK vor der Zerkleinerung gemäß dem Schritt a) carbonisiert werden oder das gemäß dem Verfahrensschritt a) zerkleinerte Produkt vor der optionalen Oxidation carbonisiert wird, bevor das so erhaltene Produkt dem Verfahrensschritt b) zugeführt wird.

Auch bei dieser Ausführungsform kann nach der Zerkleinerung und vor der Zuführung des zerkleinerten Produkts in den Verfahrensschritt b) eine Faser-Matrix-Enthaftung durchgeführt werden und das Matrixmaterial von den Carbonfasern abgetrennt werden, so dass dem Verfahrensschritt b) als Produkt des Verfahrensschritts a) nur die Carbonfasern zugeführt werden. Sofern eine oxidative Behandlung des Produkts erfolgt, wird die Abtrennung vorzugsweise vor der oxidativen Behandlung durchgeführt, wobei das optionale Carbonisieren bevorzugt ebenfalls vor der oxidativen Behandlung, aber nach der Abtrennung durchgeführt wird. Zudem ist es auch bei dieser Ausführungsform bevorzugt, nach dem Verfahrensschritt d) eine Imprägnierung und Graphitierung gemäß den Verfahrensschritten e) und f) durchzuführen. Dabei können die Verfahrensschritte d) und e) abwechselnd mehrmals nacheinander durchgeführt werden, bevor die Graphitierung durchgeführt wird.

Schließlich ist es auch bei dieser Ausführungsform bevorzugt, in dem Verfahrensschritt a) Abfallteile bzw. Ausschussteile aus carbonfaserverstärktem Verbundwerkstoff, welcher wenigstens 20 Vol.-% Carbonfasern, besonders bevorzugt 30 bis 70 Vol.-% Carbonfasern und ganz besonders bevorzugt 40 bis 60 Vol.-% Carbonfasern enthält, einzusetzen.

Gemäß einer dritten ganz besonders bevorzugten Ausführungsform der vorliegenden Erfindung umfasst das erfindungsgemäße Verfahren die nachfolgenden Schritte:
a) Zerkleinern von Abfallteilen oder Ausschussteilen aus einem carbonfaserverstärkten Beton und Abtrennen der Matrix von den Carbonfasern vorzugsweise durch Sieben oder Sichten,
b) Herstellen einer Mischung aus den in dem Schritt a) erhaltenen, zerkleinerten Carbonfasern, Pech, Koks und ggf. einem oder mehreren Additiven, wobei die Mischung weniger als 20 Gew.-% Fasern enthält,
c) Formen der in dem Schritt b) erhaltenen Mischung zu einem Formteil,
d) Carbonisieren des in dem Schritt c) erhaltenen Formteils,
e) optional Imprägnieren des in dem Schritt d) carbonisierten Formteils mit einem Imprägniermittel und
f) optional Graphitieren des in dem Schritt d) carbonisierten Formteils oder des in dem Schritt e) imprägnierten Formteils.

Da das Matrixmaterial bei dieser Ausführungsform zwingend von den Carbonfasern abgetrennt wird, bevor die Carbonfasern dem Verfahrensschritt b) zugeführt werden, findet bei dieser Ausführungsform vorzugsweise keine Carbonisierung vor dem Verfahrensschritt d) statt, d.h. insbesondere keine Carbonisierung der Abfallteile bzw. Ausschussteile vor der Zerkleinerung gemäß dem Verfahrensschritt a) und insbesondere auch keine Carbonisierung des gemäß dem Verfahrensschritt a) zerkleinerten Produkts.

Zudem wird bei dieser Ausführungsform bevorzugt auch keine oxidative Behandlung des zerkleinerten Produkts durchgeführt.

Allerdings ist es auch bei dieser Ausführungsform bevorzugt, nach dem Verfahrensschritt d) eine Imprägnierung und Graphitierung gemäß den Verfahrensschritten e) und f) durchzuführen. Dabei können die Verfahrensschritte d) und e) abwechselnd mehrmals nacheinander durchgeführt werden, bevor die Graphitierung durchgeführt wird.

Das erfindungsgemäße Verfahren eignet sich insbesondere zur Herstellung von Graphitelektroden, von Graphitverbindungsstücken für Graphitelektroden, von Kathoden für Aluminiumelektrolysezellen, von Hochofensteinen und von Formteilen aus Feinkorngraphit. Unter Feinkorngraphit wird in diesem Zusammenhang Graphit mit einer Partikelgröße von weniger als 1 mm verstanden.

Nachfolgend wird die vorliegende Erfindung anhand von diese erläuternden, diese aber nicht einschränkenden Beispielen weiter beschrieben.

### Beispiel 1

Es wurden 5 mm dicke CFK-Platten mit Epoxidharzmatrix und einem Faservolumengehalt von 50 % in einem Shredder zerkleinert und anschließend in einer Schneidmühle gemahlen. Durch ein Sieb mit Rundlöchern (Durchmesser 10 mm) wurde verhindert, dass Partikel mit größeren Abmessungen den Mahlraum der Schneidmühle verlassen.

Das gemahlene Gut war rieselfähig und enthielt einen Staubanteil von ca. 15 Gew.-%.

### Beispiel 2

Es wurden 3 mm dicke CFK-Platten mit Epoxidharzmatrix und einem Faservolumengehalt von etwa 50 % in einem Shredder zerkleinert und anschließend in einer Schneidmühle gemahlen. Durch ein Sieb mit Langlöchern (Abmessungen 3 mm x 50 mm) wurde verhindert, dass Partikel mit größeren Abmessungen den Mahlraum der Schneidmühle verlassen.

Das gemahlene Gut war rieselfähig und enthielt einen Staubanteil von ca. 20 Gew.-%.

### Beispiel 3

Teile der in dem Beispiel 1 und in dem Beispiel 2 hergestellten Recyclingfasern wurden bei 900°C für 20 Stunden unter Stickstoffatmosphäre carbonisiert. Durch Wiegen vor und nach dem Carbonisieren wurde der Masseverlust durch die Temperaturbehandlung zu etwa 40 % bestimmt.

Die Rieselfähigkeit der Materialien wurde durch die Carbonisierung verbessert.

### Beispiele 4 bis 7 und Vergleichsbeispiele 1 und 2

Aus jeweils 100 Teilen Nadelkoks (Partikelgröße < 1,2 mm), 27 Teilen Steinkohleteerpech und 3 Teilen jeweils einer der in den Beispielen 1 bis 3 hergestellten Recyclingfasern wurden jeweils Ansätze von Formmassen hergestellt. Die Mischungen wurden zu Stangen mit einem Durchmesser von 20 mm und einer Länge von 110 mm extrudiert, bei 800°C carbonisiert und bei 2800°C graphitiert.

Ferner wurden Referenzproben ohne Fasern bzw. mit 3 Teilen Kurzschnittfasern (Sigrafil C25S066 PUT, Fa. SGL Technologies GmbH) mit einer Faserlänge von 6 mm hergestellt.

An allen Proben wurde der lineare thermische Ausdehnungskoeffizient in Extrusionsrichtung (CTE) bestimmt. Die Ergebnisse sind in der nachfolgenden Tabelle 1 zusammengefasst.

**Tabelle 1**

| **Beispiel Nr.** | **Zusammensetzung** | **CTE [µm/(m·K]** |
|---|---|---|
| Vergleichsbeispiel 1 | Referenz ohne Fasern | 0,22 |
| Vergleichsbeispiel 2 | Referenz mit Kurzschnittfasern Sigrafil C25S066 PUT | 0,17 |
| Beispiel 4 | Formmasse mit Recyclingfasern aus Beispiel 1 (Sieb Ø 10 mm) | 0,17 |
| Beispiel 5 | Formmasse mit Recyclingfasern aus Beispiel 3 (Sieb Ø 10 mm carbonisiert) | 0,17 |
| Beispiel 6 | Formmasse mit Recyclingfasern aus Beispiel 2 (Sieb 3 x 50 mm) | 0,20 |
| Beispiel 7 | Formmasse mit Recyclingfasern aus Beispiel 3 (Sieb 3 x 50 mm carbonisiert) | 0,20 |

Aus den vorstehenden Ergebnissen ergibt sich, dass sowohl die Formmasse gemäß dem Vergleichsbeispiel 2, welche die frisch produzierten Kurzschnittfasern enthielt, als auch die Formmassen gemäß den Beispielen 4 bis 7, welche recycelte Fasern enthielten, im Vergleich zu der Formmasse gemäß dem Vergleichsbeispiel 1, welche keine Fasern enthielt, geringere CTE-Werte aufwiesen, also der CTE reduziert wurde. Dabei wurde kein Unterschied zwischen carbonisierten und nicht carbonisierten Recyclingfasern beobachtet.

## Patentansprüche

1. Verfahren zur Herstellung eines Formteils aus Carbonfasern in einer Menge von weniger als 20 Gew.-% enthaltendem Kohlenstoff, welches die nachfolgenden Schritte umfasst:
a) Zerkleinern von Abfallteilen oder Ausschussteilen aus einem carbonfaserverstärkten Verbundwerkstoff,
b) Herstellen einer Mischung aus dem in dem Schritt a) erhaltenen, zerkleinerten Produkt, einem Bindemittel, einem Kohlenstoffmaterial und ggf. einem oder mehreren Additiven, wobei die Mischung weniger als 20 Gew.-% Fasern enthält,
c) Formen der in dem Schritt b) erhaltenen Mischung zu einem Formteil und
d) Carbonisieren des in dem Schritt c) erhaltenen Formteils.

2. Verfahren nach Anspruch 1,
**dadurch gekennzeichnet, dass**
die in dem Schritt a) eingesetzten Abfallteile oder Ausschussteile bevorzugt aus einem carbonfaserverstärkten Kunststoff, einem carbonfaserverstärkten Kohlenstoff, einem carbonfaserverstärkten Beton oder einer Mischung aus zwei oder mehr der vorgenannten Verbundwerkstoffe zusammengesetzt sind.

3. Verfahren nach Anspruch 1 oder 2,
**dadurch gekennzeichnet, dass**
das Zerkleinern der Abfallteile oder Ausschussteile in dem Schritt a) mit einem Shredder, einer Schneidmühle, einer Prallmühle oder einer Hammermühle durchgeführt wird.

4. Verfahren nach zumindest einem der vorstehenden Ansprüche,
**dadurch gekennzeichnet, dass**
die Abfallteile oder Ausschussteile aus dem carbonfaserverstärkten Verbundwerkstoff in dem Schritt a) vornehmlich zu Partikeln mit einer Länge zwischen 1 und 100 mm zerkleinert werden, wobei vorzugsweise während oder nach dem Zerkleinern aus dem zerkleinerten Produkt Staub ausgesiebt wird, so dass das zerkleinerte Produkt des Verfahrensschritts a) besonders bevorzugt weniger als 5 Gew.-% Staubpartikel mit einer mittleren Partikelgröße von weniger als 100 µm aufweist.

5. Verfahren nach zumindest einem der vorstehenden Ansprüche,
**dadurch gekennzeichnet, dass**
in dem Schritt a) während oder nach dem Zerkleinern der Abfallteile oder Ausschussteile die Matrix und die Carbonfasern des Verbundwerkstoffes voneinander gelöst werden, wobei das Lösen der Matrix von den Carbonfasern vorzugsweise durch Kontaktieren der Abfallteile oder Ausschussteile mit einer Säure, einer Lauge oder einem Lösungsmittel bewirkt wird.

6. Verfahren nach zumindest einem der vorstehenden Ansprüche,
**dadurch gekennzeichnet, dass**
in dem Schritt a) während oder bevorzugt nach dem Zerkleinern der Abfallteile oder Ausschussteile die Matrix von den Carbonfasern des Verbundwerkstoffes abgetrennt wird, wobei das Abtrennen der Matrix von den Carbonfasern vorzugsweise durch Sieben oder Sichten durchgeführt wird, wobei das Sichten besonders bevorzugt in einem Rotationssichter, Windsichter oder Zickzacksichter durchgeführt wird.

7. Verfahren nach zumindest einem der vorstehenden Ansprüche,
**dadurch gekennzeichnet, dass**
in dem Schritt b) als Bindemittel eine Verbindung eingesetzt wird, welche aus der aus Phenolharzen, Pechen, Furanharzen, Phenylestern und beliebigen Mischungen von zwei oder mehr der vorgenannten Verbindungen bestehenden Gruppe ausgewählt wird, und/oder in dem Schritt b) als Kohlenstoffmaterial Koks, bevorzugt Pechkoks, metallurgischer Koks oder Petroleumkoks, insbesondere Nadelkoks, eingesetzt wird, wobei in dem Schritt b) in der Mischung das Verhältnis zwischen Kohlenstoffmaterial und Bindemittel besonders bevorzugt auf 5:1 bis 2:1 und bevorzugt auf 4:1 eingestellt wird.

8. Verfahren nach zumindest einem der vorstehenden Ansprüche,
**dadurch gekennzeichnet, dass**
in dem Schritt b) der Fasergehalt der Mischung auf weniger als 15 Gew.-%, bevorzugt auf weniger als 10 Gew.-%, besonders bevorzugt auf weniger als 5 Gew.-% und ganz besonders bevorzugt auf weniger als 3 Gew.-% eingestellt wird.

9. Verfahren nach zumindest einem der vorstehenden Ansprüche,
**dadurch gekennzeichnet, dass**
das Formteil nach dem Schritt d) mit einem Imprägniermittel, welches vorzugsweise Imprägnierpech ist, imprägniert und anschließend graphitiert wird, wobei die Graphitierung besonders bevorzugt bei einer Temperatur zwischen 1.800 und 3.000°C und ganz besonders bevorzugt zwischen 2.300 und 2.700°C durchgeführt wird.

10. Verfahren nach zumindest einem der vorstehenden Ansprüche,
**dadurch gekennzeichnet, dass**
die in dem Schritt a) zerkleinerten Abfallteile oder Ausschussteile vor der Zuführung in den Verfahrensschritt b) einer oxidativen Behandlung unterzogen werden, wobei die oxidative Behandlung vorzugsweise die Oxidation in einem ein Oxidationsmittel enthaltenden wässrigen Bad, die anodische Oxidation in einem Elektrolyt enthaltenden wässrigen Bad oder die Oxidation in einem ein Oxidationsmittel enthaltenden Gasstrom umfasst.

11. Verfahren nach zumindest einem der vorstehenden Ansprüche,
**dadurch gekennzeichnet, dass**
die Abfallteile oder Ausschussteile aus carbonfaserverstärktem Verbundwerkstoff vor der Durchführung des Schritts a) oder nach dem Zerkleinern in dem Schritt a), aber vor dem Schritt b) carbonisiert werden.

12. Verfahren nach zumindest einem der vorstehenden Ansprüche,
**dadurch gekennzeichnet, dass**
dieses die nachfolgenden Schritte umfasst:
a) Zerkleinern von Abfallteilen oder Ausschussteilen aus einem carbonfaserverstärkten Kohlenstoff und optional Oxidation des zerkleinerten Produkts,
b) Herstellen einer Mischung aus dem in dem Schritt a) erhaltenen, zerkleinerten Produkt, Pech, Koks und ggf. einem oder mehreren Additiven, wobei die Mischung weniger als 20 Gew.-% Fasern enthält,
c) Formen der in dem Schritt b) erhaltenen Mischung zu einem Formteil,
d) Carbonisieren des in dem Schritt c) erhaltenen Formteils,
e) optional Imprägnieren des in dem Schritt d) carbonisierten Formteils mit einem Imprägniermittel und
f) optional Graphitieren des in dem Schritt d) carbonisierten Formteils oder des in dem Schritt e) imprägnierten Formteils.

13. Verfahren nach zumindest einem der Ansprüche 1 bis 11,
**dadurch gekennzeichnet, dass**
dieses die nachfolgenden Schritte umfasst:
a) Zerkleinern von Abfallteilen oder Ausschussteilen aus einem carbonfaserverstärktem Kunststoff und optional Oxidation des zerkleinerten Produkts,
b) Herstellen einer Mischung aus dem in dem Schritt a) erhaltenen, zerkleinerten Produkt, Pech, Koks und ggf. einem oder mehreren Additiven, wobei die Mischung weniger als 20 Gew.-% Fasern enthält,
c) Formen der in dem Schritt b) erhaltenen Mischung zu einem Formteil,
d) Carbonisieren des in dem Schritt c) erhaltenen Formteils,
e) optional Imprägnieren des in dem Schritt d) carbonisierten Formteils mit einem Imprägniermittel und
f) optional Graphitieren des in dem Schritt d) carbonisierten Formteils oder des in dem Schritt e) imprägnierten Formteils, wobei
die Abfallteile oder Ausschussteile aus carbonfaserverstärktem Kunststoff vor der Zerkleinerung gemäß dem Schritt a) carbonisiert werden und/oder das gemäß dem Schritt a) zerkleinerte Produkt vor der optionalen Oxidation carbonisiert wird, bevor das so erhaltene Produkt dem Schritt b) zugeführt wird.

14. Verfahren nach zumindest einem der Ansprüche 1 bis 11,
**dadurch gekennzeichnet, dass**
dieses die nachfolgenden Schritte umfasst:
a) Zerkleinern von Abfallteilen oder Ausschussteilen aus einem carbonfaserverstärkten Beton und Abtrennen der Matrix von den Carbonfasern vorzugsweise durch Sieben oder Sichten,
b) Herstellen einer Mischung aus den in dem Schritt a) erhaltenen, zerkleinerten Carbonfasern, Pech, Koks und ggf. einem oder mehreren Additiven, wobei die Mischung weniger als 20 Gew.-% Fasern enthält,
c) Formen der in dem Schritt b) erhaltenen Mischung zu einem Formteil,
d) Carbonisieren des in dem Schritt c) erhaltenen Formteils,
e) optional Imprägnieren des in dem Schritt d) carbonisierten Formteils mit einem Imprägniermittel und
f) optional Graphitieren des in dem Schritt d) carbonisierten Formteils oder des in dem Schritt e) imprägnierten Formteils.

## Claims

1. A method for manufacturing a moulded part produced from carbon containing a quantity of less than 20 % by weight of carbon fibres, which comprises the following steps:
a) comminuting waste parts or scrap parts produced from a carbon fibre-reinforced composite material,
b) producing a mixture from the comminuted product obtained in step a), a binder, a carbon material and optionally one or more additives, wherein the mixture contains less than 20 % by weight of fibres,
c) moulding the mixture obtained in step b) into a moulded part, and
d) carbonizing the moulded part obtained in step c) .

2. The method as claimed in claim 1,**characterized in that** the waste parts or scrap parts used in step a) are preferably composed of a carbon fibre-reinforced synthetic material, a carbon fibre-reinforced carbon, a carbon fibre-reinforced concrete and a mixture of two or more of said composite materials.

3. The method as claimed in claim 1 or claim 2, **characterized in that** comminution of the waste parts or scrap parts in step a) is carried out with a shredder, a cutting mill, an impact mill or a hammer mill.

4. The method as claimed in at least one of the preceding claims, **characterized in that** the waste parts or scrap parts from the carbon fibre-reinforced composite material in step a) are primarily comminuted into particles with a length of between 1 and 100 mm, wherein preferably, dust is screened out of the comminuted product during or after comminution so that particularly preferably, the comminuted product from step a) of the method comprises less than 5 % by weight of dust particles with a mean particle size of less than 100 µm.

5. The method as claimed in at least one of the preceding claims, **characterized in that** in step a), during or after comminution of the waste parts or scrap parts, the matrix and the carbon fibres of the composite material are released from each other, wherein release of the matrix from the carbon fibres is preferably carried out by contacting the waste parts or scrap parts with an acid, a caustic substance or a solvent.

6. The method as claimed in at least one of the preceding claims, **characterized in that** in step a), the matrix is separated from the carbon fibres of the composite material during or preferably after comminution of the waste parts or scrap parts, wherein separation of the matrix from the carbon fibres is preferably carried out by screening or sifting, wherein sifting is particularly preferably carried out with a rotary sifter, a pneumatic sifter or a zigzag sifter.

7. The method as claimed in at least one of the preceding claims, **characterized in that** in step b), a compound is used as the binder which is selected from the group consisting of phenolic resins, pitches, furan resins, phenyl esters and any mixture of two or more of said compounds, and/or in step b), coke, pitch coke, metallurgical coke, petcoke, in particular needle coke, is used as the carbon material, wherein in the mixture of step b), the ratio between the carbon material and the binder is particularly preferably 5:1 to 2:1, and preferably 4:1.

8. The method as claimed in at least one of the preceding claims, **characterized in that** in step b), the fibre content of the mixture is adjusted to less than 15 % by weight, preferably to less than 10 % by weight, particularly preferably to less than 5 % by weight and more particularly preferably to less than 3 % by weight.

9. The method as claimed in at least one of the preceding claims, **characterized in that** after step d), the moulded part is impregnated with an impregnating agent which is preferably impregnating pitch, and subsequently graphitized, wherein the graphitizing is particularly preferably carried out at a temperature of between 1800°C and 3000°C and more particularly preferably between 2300°C and 2700°C.

10. The method as claimed in at least one of the preceding claims, **characterized in that** before being fed into step b) of the method, the waste parts or scrap parts comminuted in step a) undergo an oxidative treatment, wherein the oxidative treatment preferably comprises oxidation in an aqueous bath containing an oxidizing agent, the anodic oxidation is carried out in an aqueous bath containing an electrolyte or the oxidation is carried out in a stream of gas containing an oxidizing agent.

11. The method as claimed in at least one of the preceding claims, **characterized in that** before carrying out step a) or after the comminution of in step a) but before step b), the waste parts or scrap parts produced from carbon-reinforced composite material are carbonized.

12. The method as claimed in at least one of the preceding claims, **characterized in that** it comprises the following steps:
a) comminution of waste parts or scrap parts produced from a carbon fibre-reinforced synthetic material and optional oxidation of the comminuted product,
b) production of a mixture of the comminuted product obtained in step a), pitch, coke and one or more optional additives, wherein the mixture contains less than 20 % by weight of fibres,
c) moulding of the mixture obtained in step b) into a moulded part,
d) carbonizing of the moulded part obtained in step c),
e) optionally, impregnation of the moulded part carbonized in step d) with an impregnating agent, and
f) optionally, graphitizing of the moulded part carbonized in step d) or the moulded part impregnated in step e).

13. The method as claimed in at least one of claims 1 to 11, **characterized in that** it comprises the following steps:
a) comminution of waste parts or scrap parts produced from a carbon fibre-reinforced synthetic material and optional oxidation of the comminuted product,
b) production of a mixture of the comminuted product obtained in step a), pitch, coke and one or more optional additives, wherein the mixture contains less than 20 % by weight of fibres,
c) moulding of the mixture obtained in step b) into a moulded part,
d) carbonizing of the moulded part obtained in step c),
e) optionally, impregnation of the moulded part carbonized in step d) with an impregnating agent, and
f) optionally, graphitizing of the moulded part carbonized in step d) or the moulded part impregnated in step e), wherein
before comminution, the waste parts or scrap parts produced from carbon-reinforced synthetic material are carbonized in accordance with step a) and/or prior to the optional oxidation, the product is comminuted in step a) is carbonized before the product obtained in this manner is fed into step b).

14. The method as claimed in at least one of claims 1 to 11, **characterized in that** it comprises the following steps:
a) comminution of waste parts or scrap parts produced from a carbon fibre-reinforced concrete and separating the matrix from the carbon fibres, preferably by screening or sifting,
b) production of a mixture of the comminuted carbon fibres obtained in step a), pitch, coke and one or more optional additives, wherein the mixture contains less than 20 % by weight of fibres,
c) moulding of the mixture obtained in step b) into a moulded part,
d) carbonizing of the moulded part obtained in step c),
e) optionally, impregnation of the moulded part carbonized in step d) with an impregnating agent, and
f) optionally, graphitizing of the moulded part carbonized in step d) or the moulded part impregnated in step e).

## Revendications

1. Procédé, destiné à fabriquer une pièce moulée en fibres de carbone, contenant du carbone dans une quantité de moins de 20 % en poids, lequel comprend les étapes suivantes, consistant à :
a) broyer des éléments de déchets ou des éléments de rebut en une matière composite renforcée par fibres de carbone,
b) créer un mélange à partir du produit broyé obtenu dans l'étape a), d'un agent liant, d'une matière carbonée et le cas échéant, d'un ou de plusieurs additifs, le mélange contenant moins de 20 % en poids de fibres,
c) mouler le mélange obtenu dans l'étape b) en une pièce moulée, et
d) carboniser la pièce moulée obtenue dans l'étape c).

2. Procédé selon la revendication 1,**caractérisé en ce que** les éléments de déchets ou éléments de rebut mis en oeuvre dans l'étape a) sont composés d'une matière plastique renforcée par fibres de carbone, d'un carbone renforcé par fibres de carbone, d'un béton renforcé par fibres de carbone ou d'un mélange de deux ou plus des matières composites précédemment citées.

3. Procédé selon la revendication 1 ou 2, **caractérisé en ce que** le broyage des éléments de déchets ou éléments de rebut dans l'étape a) est réalisé à l'aide d'une déchiqueteuse, d'un broyeur, d'un concasseur à impacts ou d'un broyeur à marteaux.

4. Procédé selon au moins l'une quelconque des revendications précédentes, **caractérisé en ce que** les éléments de déchets ou éléments de rebut en la matière composite renforcée par fibres de carbone sont broyés dans l'étape a) de préférence en particules d'une longueur comprise entre 1 et 100 mm, de préférence pendant ou après le broyage, de la poussière étant tamisée hors du produit broyé, de sorte que le produit broyé obtenu dans l'étape de procédé a) comporte de manière particulièrement préférentielle moins de 5 % en poids de particules de poussière d'une taille moyenne de particules inférieure à 100 µm.

5. Procédé selon au moins l'une quelconque des revendications précédentes, **caractérisé en ce que** dans l'étape a), pendant ou après le broyage des éléments de déchets ou éléments de rebut, la matrice et les fibres de carbones de la matière composite sont désolidarisées l'une de l'autre, la désolidarisation de la matrice et des fibres de carbone étant provoquée de préférence par mise en contact des éléments de déchets ou éléments de rebut avec un acide, une lessive ou un solvant.

6. Procédé selon au moins l'une quelconque des revendications précédentes, **caractérisé en ce que** dans l'étape a), pendant ou de préférence après le broyage des éléments de déchets ou éléments de rebut, la matrice est sectionnée des fibres de carbone de la matière composite, le sectionnement de la matrice des fibres de carbone étant réalisé de préférence par tamisage ou séparation, de manière particulièrement préférentielle dans un séparateur giratoire, un séparateur pneumatique ou un séparateur en zigzag.

7. Procédé selon au moins l'une quelconque des revendications précédentes, **caractérisé en ce que** dans l'étape b), il est mis en oeuvre en tant qu'agent liant un composé, lequel est choisi dans le groupe composé de résines phénoliques, de poix, de résines furanniques, d'esters phényliques et de mélanges quelconques de deux ou de plusieurs des composés précédemment cités, et/ou dans l'étape b), il est mis en oeuvre en tant que matière carbonée du coke, de préférence du coke de brai, du coke métallurgique ou du coke de pétrole, notamment du coke aciculaire, dans l'étape b), le rapport entre la matière carbonée et l'agent liant dans le mélange étant réglé de manière particulièrement préférentielle à de 5 : 1 à 2 : 1 et de préférence à 4 : 1.

8. Procédé selon au moins l'une quelconque des revendications précédentes, **caractérisé en ce que** dans l'étape b), la teneur en fibres du mélange est réglée à moins de 15 % en poids, de préférence à moins de 10 % en poids, de manière particulièrement préférentielle, à moins de 5 % en poids et de manière tout particulièrement préférentielle, à moins de 3 % en poids.

9. Procédé selon au moins l'une quelconque des revendications précédentes, **caractérisé en ce que** la pièce moulée après l'étape d) est imprégnée d'un agent d'imprégnation qui est de préférence de la poix d'imprégnation puis graphitée, la graphitisation étant réalisée de manière particulièrement préférentielle à une température comprise entre 1.800 et 3.000°et de manière tout particulièrement préférentielle, entre 2.300 et 2.700°C.

10. Procédé selon au moins l'une quelconque des revendications précédentes, **caractérisé en ce qu'**avant leur amenage vers l'étape de procédé b), les éléments de déchets ou éléments de rebut broyés dans l'étape a) sont soumis à un traitement oxydatif, le traitement oxydatif comprenant de préférence l'oxydation dans un bain aqueux contenant un agent oxydant, l'oxydation anodique dans un bain aqueux contenant un électrolyte ou l'oxydation dans un flux gazeux contenant un agent oxydant.

11. Procédé selon au moins l'une quelconque des revendications précédentes, **caractérisé en ce qu'**avant la réalisation de l'étape a) ou après le broyage dans l'étape a), mais avant l'étape b), les éléments de déchets ou éléments de rebut en matière composite renforcée par fibres de carbone sont carbonisés.

12. Procédé selon au moins l'une quelconque des revendications précédentes, **caractérisé en ce que** celui-ci comporte les étapes suivantes consistant à :
a) broyer des éléments de déchets ou éléments de rebut en un carbone renforcé par fibres de carbone et en option, oxyder le produit broyé,
b) créer un mélange à partir du produit broyé obtenu dans l'étape a), d'un agent liant, d'une matière carbonée et le cas échéant, d'un ou de plusieurs additifs, le mélange contenant moins de 20 % en poids de fibres,
c) mouler le mélange obtenu dans l'étape b) en une pièce moulée, et
d) carboniser la pièce moulée obtenue dans l'étape c),
e) en option, imprégner la pièce moulée carbonisée dans l'étape d) avec un agent d'imprégnation et
f) en option, graphiter la pièce moulée carbonisée dans l'étape d) ou la pièce moulée imprégnée dans l'étape e).

13. Procédé selon au moins l'une quelconque des revendications 1 à 11, **caractérisé en ce que** celui-ci comporte les étapes suivantes consistant à :
a) broyer des éléments de déchets ou éléments de rebut en un carbone renforcé par fibres de carbone et en option, oxyder le produit broyé,
b) créer un mélange à partir du produit broyé obtenu dans l'étape a), d'un agent liant, d'une matière carbonée et le cas échéant, d'un ou de plusieurs additifs, le mélange contenant moins de 20 % en poids de fibres,
c) mouler le mélange obtenu dans l'étape b) en une pièce moulée, et
d) carboniser la pièce moulée obtenue dans l'étape c),
e) en option, imprégner la pièce moulée carbonisée dans l'étape d) avec un agent d'imprégnation et
f) en option, graphiter la pièce moulée carbonisée dans l'étape d) ou la pièce moulée imprégnée dans l'étape e)
avant le broyage selon l'étape a), les éléments de déchets ou éléments de rebut en matière plastique renforcée par fibres de carbone étant carbonisés et/ou avant l'oxydation optionnelle, le produit broyé selon l'étape a) étant carbonisé, avant que le produit ainsi obtenu soit amené vers l'étape b).

14. Procédé selon au moins l'une quelconque des revendications 1 à 11, **caractérisé en ce que** celui-ci comporte les étapes suivantes consistant à :
a) broyer des éléments de déchets ou éléments de rebut en un béton renforcé par fibres de carbone et sectionnement de la matrice et des fibres de carbone, de préférence par tamise ou séparation,
b) créer un mélange à partir du produit broyé obtenu dans l'étape a), d'un agent liant, d'une matière carbonée et le cas échéant, d'un ou de plusieurs additifs, le mélange contenant moins de 20 % en poids de fibres,
c) mouler le mélange obtenu dans l'étape b) en une pièce moulée, et
d) carboniser la pièce moulée obtenue dans l'étape c),
e) en option, imprégner la pièce moulée carbonisée dans l'étape d) avec un agent d'imprégnation et
f) en option, graphiter la pièce moulée carbonisée dans l'étape d) ou la pièce moulée imprégnée dans l'étape e).
